# EUROPEAN PATENT APPLICATION

(11) **EP 1 895 122 A1**
(43) Date of publication of application: **05.03.2008**
(21) Application number: 06017933.0
(22) Date of filing: 28.08.2006
(51) Int. Cl.: F02C 1/00, F02C 7/20, F01D 1/04, F01D 1/00, F01D 25/28

(54) **Modular turbine engine**

(71) Applicant: SIEMENS AKTIENGESELLSCHAFT, 80333 München (DE)
(72) Inventor: Senior, Peter, LE8 5PY Countesthorpe, Leicester (GB)

(57) **Abstract**

A modular turbine engine is provided which comprises
- a compressor section (1), a combustion section (3), a turbine section (5) which are arranged in flow series;
- a rotor (7) extending through the compressor section (1), the combustion section (3) and the turbine section (5);
- a casing (9, 91, 93, 95) extending over at least a part of the compressor section (1), the combustion section (3) and at least a part of the turbine section (5) and surrounding the rotor (7);
- at least one set of compressor blading including compressor vanes (13) and compressor blades (11); and
- at least one set of turbine blading comprising turbine vanes (17) and turbine blades (15),
- the rotor (7) being equipped with first receptacles which are designed such as to allow for fixing compressor blades (11) and turbine blades to the rotor (7);
- the casing (9, 91, 93, 95) being equipped with second receptacles (18) which are designed such as to allow for fixing compressor vanes (13) and turbine vanes (17) to the casing (9, 91, 93, 95).

In the modular turbine engine, at least a first blading module is present, which comprises at least one set of compressor blading (11, 13) and at least one set of turbine blading (15, 17) the blades and vanes of which are adapted to being fixed to first receptacles (16) of the rotor (7) and second receptacles (18) of the casing (9, 91, 93, 95). The at least one set of compressor blading (11, 13) and the at least one set of turbine blading (15, 17) of the first module are adapted to each other so that the engine can be operated with only the blading sets of the first module being fixed to the rotor (7) and the casing (9, 91, 93, 95).

## Description

The present invention relates to a modular turbine engine comprising a compressor section, a combustion section, a turbine section, which are arranged in flow series, and a rotor extending through the compressor section, the combustion section and the turbine section.

The issues addressed by the invention are operational issues running a turbine engine, in particular a gas turbine engine, at very low levels of output. More specifically, the issue of efficiency and fouling of the combustion equipment when operating with liquid fuels is addressed. This mode of operation can result in difficulties with pollutant emissions.

There are currently issues with the life cycle usage of small gas turbine engines. Frequently, industrial customers buy equipment which will eventually have to power a large installation. However, in the early stages (which may last for several years) of developing such a plant, the demand on the engine may be much lower than its full capacity. This causes the customer to operate well below the rating of the engine, which can lead to the problems mentioned above. Furthermore, the initial investment made by the customer is not being fully serviced by profits supported by the output of the engine, thus, presenting an economic barrier to wider application of GT engines.

These operational issues have previously been addressed by adding extra variable stages of guide vanes to the compressor of a gas turbine engine or bleeding air after the compressor and feeding this either into the intake or exhaust of the engine. Such measures obviously require extra costs on the hardware (at a time when the customer is already at an economic disadvantage) and can only extend reliable performance downwards so far into the range of low load operation. Furthermore, the complexity of equipment (and operation) needed to do this is then retained once the customer has developed the plant to demand only high levels of output.

It is, therefore, an objective of the present invention to provide a more flexible turbine engine, in particular a more flexible gas turbine engine.

This objective is solved by a modular turbine engine according to claim 1. The depending claims define further developments of the present invention.

An inventive modular turbine engine comprises a compressor section, a combustion section, a turbine section, which are arranged in flow series, and a rotor extending through the compressor section, the combustion section and the turbine section. The casing extends over at least a part of the compressor section, the combustion section and at least a part of the turbine section and surrounds the rotor in these sections. The modular turbine engine further comprises at least one set of compressor blading, i.e. compressor blades and vanes, and at least one set of turbine blading, i.e. turbine blades and vanes. The rotor is equipped with first receptacles, which are designed such as to allow for fixing compressor blades and turbine blades to the rotor. In addition, the casing is equipped with second receptacles, which are designed such as to allow for fixing compressor vanes and turbine vanes to the casing. In the inventive modular turbine engine, at least a first blading module is present which comprises at least one set of compressor blading and at least one set turbine blading, where the blades and vanes of the blading module are adapted to being fixed to first receptacles of the rotor and second receptacles of the casing. The at least one set of compressor blading and the at least one set of turbine blading are adapted to each other so that the engine can be operated with only the blading sets of the first module being fixed to the rotor and the casing, respectively. When fixed to the rotor and the casing, the blades of the at least one set of compressor blading and the blades of the at least one set of turbine blading leave some of the receptacles unused. The unused receptacles can be blanked off to avoid aerodynamic loss.

In addition, the modular turbine engine may comprise a second blading module with at least one set of compressor blading and the at least one set of turbine blading, where the blades and vanes of the blading module are adapted to being fixed to other first receptacles of the rotor and other second receptacles of the casing than the blades and vanes of the at least one set of compressor blading and the at least one set of turbine blading of the first blading module. Moreover, the at least one set of compressor blading and the at least one set of turbine blading of the second blading module are adapted to each other and to the blading sets of the first module so that the engine can be operated with the blading sets of the first module and the blading sets of the second module being fixed to the rotor and the casing.

A typical first blading module may comprise a first row of turbine blades and/or vanes and the last four rows of compressor blades and/or vanes. A typical second module may comprise a second row of the turbine blades and/or vanes together with further three centre rows of compressor blades and/or vanes. A third module may comprise the last row of turbine blades and/or vanes and the first two rows of compressor blades and/or vanes. Since it is current practice to design all the blading as a balanced package, an appropriate choice of the variations in the pressure ratios provided by the individual modules enables the modules to be independently fitted to the engine. This can be achieved by particular trade-offs of configurations of blade external shapes, numbers, spacing and also the internal cooling schemes of the turbine blades.

It would be possible that the rotor and the casing components would be manufactured with all the attachment points (commonly known as roots) for the full set of blading provided for the full scale engine. However, in the partially equipped condition, unused blocks of roots would be filled or covered with filling elements like blanking rings or "dummy blades", which would form surfaces creating a low-loss flow path annulus at entry to the partial compressor and at exit from the partial turbine. The inventive modular turbine engine may, therefore, comprise first filling elements being adapted to be inserted into first receptacles not used for a set of compressor blading or a set of turbine blading. The first filling elements may, in particular, comprise blanking elements, i.e. elements closing the receptacles so as to form a smooth surface of the rotor, like the already mentioned blanking rings and/or dummy elements. Moreover, the modular turbine engine may further comprise second filling elements being adapted to be inserted into second receptacles not used for a set of compressor blading or a set of turbine blading. Again, these filling elements can be implemented as blanking elements and/or dummy elements.

Instead of the mentioned filling elements or in addition to them, bypass elements could be present, which are adapted to be inserted into first or second receptacles on the casing or the rotor located upstream and downstream of combustors in the combustion section and which are designed such as to provide a flow path bypassing the combustors. In combination with suitably designed channels in the rotor and/or in the casing this would extend the operability range of a particular partially-equipped configuration. In practice, such approach might well reduce the number of blocks required over the whole engine life cycle to two, reducing any downtime impact of the customer's upgrade path. The extraction points for the flow bypassing the combustors in the "blanked" compressor section would be at a point with a higher static pressure than the exhaust points for the flow in the "blanked" turbine section. In other words, the extraction points would be towards the upstream part of the "blanked" compressor section (i.e. furthest away from the installed compressor blading) and towards the upstream part of the "blanked" turbine (i.e. closest to the installed turbine blading)

In a further development of the modular turbine engine, the casing comprises compressor casing modules being adapted to be connected to a casing of the combustion section or to another compressor casing module. Moreover, each compressor casing module is adapted to a blading module such as to house respective set or sets of compressor blading. In addition, the modular turbine engine may comprise turbine casing modules being adapted to be connected to a casing of the combustion section or to another turbine casing module. Moreover, each turbine casing module is adapted to a blading module, such as to house the respective set or sets of turbine blading. In other words, in this implementation of the modular turbine engine, the casing would also be designed in the form of modules, which are only installed if needed. Then, only the rotor requires filling elements and this would clearly enhance the cost stream advantage even further. As an additional advantage, it would also reduce small aerodynamic losses caused by blanked sections of the casing. By careful design, it may well be that some blocks could be made interchangeable for different elements of engines in the same family. This would clearly allow the exploitation of manufacturing quantity and inventory advantages.

If the modular engine is to be driven by liquid fuel, it may comprise a number of different liquid fuel nozzles, which are to be used together with different blading configurations. It is, for example, possible to include to each blading module adapted fuel nozzles. However, if the turbine engine is to be operated with gaseous fuel, the system is likely to be operable without any deviation from the fully equipped fuel system.

Further features, properties and advantages of the present invention will become clear from the following description of embodiments of the invention in conjunction with the accompanying drawings.

Fig. 1 shows in highly schematic view, a longitudinal section through a modular gas turbine engine according to a first embodiment of the invention in a first partially equipped state.

Fig. 2 shows the modular gas turbine engine of Fig. 1 in a second partially equipped state.

Fig. 3 shows the modular gas turbine engine of Fig. 1 in a fully equipped state.

Fig. 4 shows a detail of the gas turbine engine casing shown in Fig. 1.

Fig. 5 shows a first kind of filling elements to be used for blanking in the casing of the modular gas turbine engine according to Fig. 1.

Fig. 6 shows a section through the filling element shown in Fig. 5 along the line A-A.

Fig. 7 shows a second kind of filling elements to be used in the modular gas turbine engine according to Fig. 1

Fig. 8 shows a detail of the rotor of the modular gas turbine engine of Fig. 1.

Fig. 9 shows a third kind of filling elements to be used for blanking in the rotor of the gas turbine engine shown in Fig. 1.

Fig. 10 shows a section through the filling element shown in Fig. 9 along the line B-B.

Fig. 11 shows a fourth kind of filling elements to be used in the gas turbine engine of Fig. 1 in a first view.

Fig. 12 shows a modification of the modular gas turbine engine shown in Fig. 1 which incorporates bypass passages.

Fig. 13 shows a first partially equipped state of a modular gas turbine engine according to a second embodiment of the invention minimally equipped with a modular casing.

Fig. 14 shows the modular gas turbine engine of Fig. 13 in a second partially equipped state partially equipped with a modular casing.

Fig. 15 shows the modular gas turbine engine of Fig. 14 in a fully equipped state.

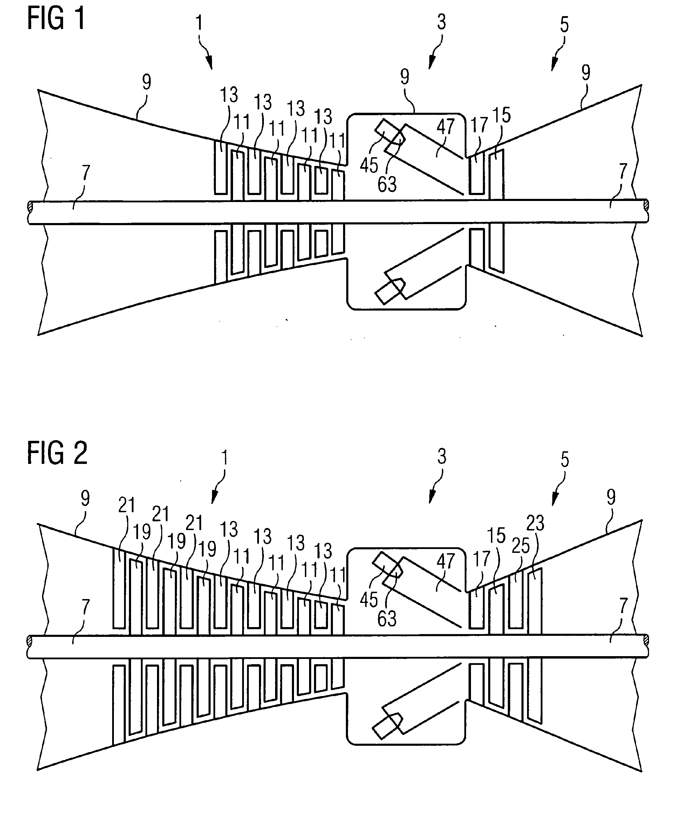

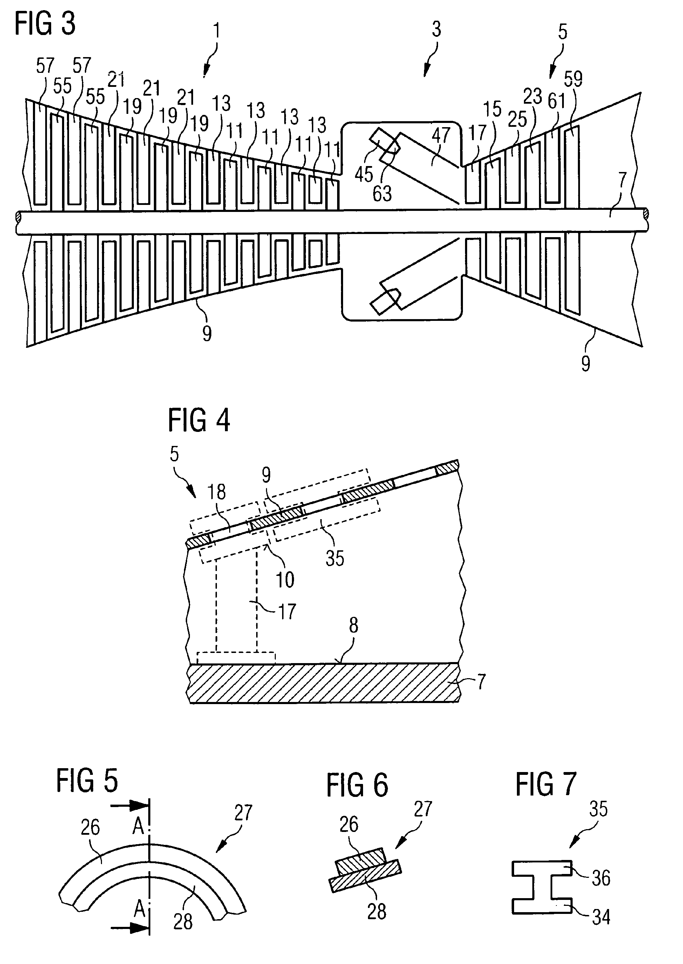

A first embodiment of the modular gas turbine engine will now be described with respect to Figs. 1 to 11. In these Figures, Figs. 1 and 2 show a modular gas turbine engine in two different partially equipped states, and Fig. 3 shows the same engine in a fully equipped state. Figs. 4 and 5 show details of the gas turbine engine's casing 9 and its rotor 7 together with receptacles 16, 18 for receiving the roots of blades 11, 17, 19, 23, 55, 59 and vanes 13, 17, 21, 25, 57, 59, or filling elements 27, 29, 35, 37, which are adapted to be inserted into receptacles 16, 18 of the casing 9 and the rotor 7 not used in a partially equipped state of the engine. The receptacles 16, 18 are adapted to the roots of the used vanes and blades. Although a special configuration of the roots is shown in the Figures 4-11, other kinds of roots commonly used in gas turbine engines, are also possible.

In Fig. 1, the modular engine is shown in a minimum equipped state. The engine comprises flow series a compressor section 1, a combustion section 3 and a turbine section 5. A rotor 7 extends through the compressor section 1, the combustion section 3 and the turbine section 5. A casing 9 surrounds the compressor section 1, the combustion section 3 and the turbine section 5. Although not explicitly shown in the Figure, the casing 9 may be subdivided into a compressor casing surrounding the compressor section 1, a combustion section casing surrounding the combustion section 3 and a turbine casing surrounding the turbine section 5.

The casing 9 and the rotor 7 are designed such as to be able to carry for example nine rows of compressor blades and compressor vanes and for example three rows of turbine vanes and turbine blades, respectively, in a fully equipped state (see Fig. 3). In the minimum equipped state example shown in Fig. 1, only the last four rows of compressor blades 11 and compressor vanes 13 are fixed to the rotor 7 and the casing 9, respectively. In the turbine section 5, only the first row of turbine blades 15 and turbine vanes 17 are fixed to the rotor 7 and the casing 9, respectively. The compressor blades 11, the compressor vanes 13, the turbine blades 15 and the turbine vanes 17 form sets of compressor blading and turbine blading, respectively, which are part of a first blading module of the modular gas turbine engine shown in Figs. 1 to 3.

A second partially equipped state of the modular gas turbine engine is shown in Fig. 2. In this state, a second blading module comprising for example three centre rows of compressor blades 19 and compressor vanes 21 as well as for example a second row of turbine blades 23 and turbine vanes 25 is fitted to the engine. The turbine blades 23 and the compressor blades 19 are inserted into receptacles 16, 18 of the rotor 7 and the casing 9, respectively, which are not occupied by blades or vanes of the first blading module.

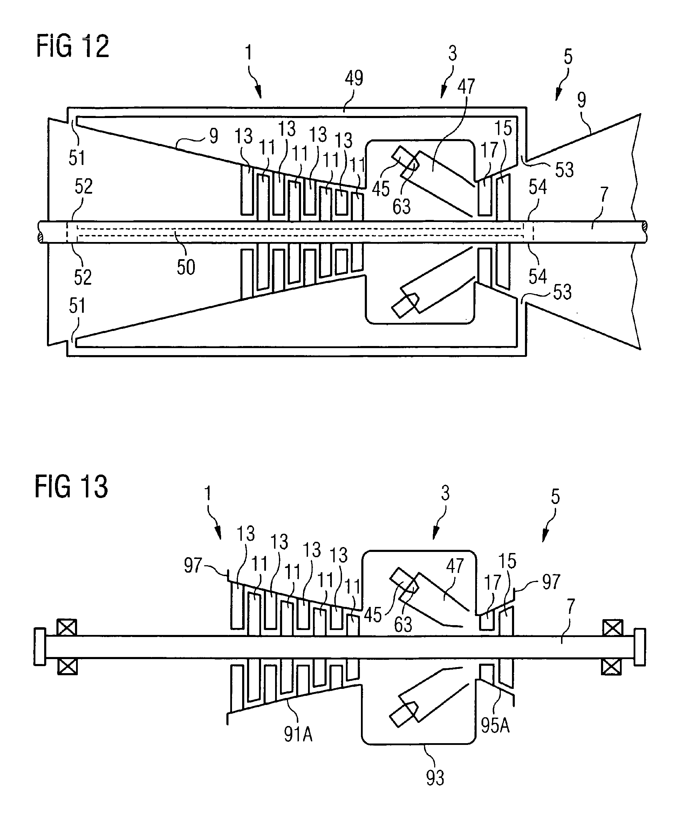

In the partially equipped configurations of the modular gas turbine engine which are shown in Figs. 1 and 2, a number of receptacles 16, 18 remain unused. Such receptacles are filled with sealed filling elements, some of which are shown in Figs. 5 to 7 and 9 to 11. One can, in general, distinguish between two different kinds of filling elements, namely such filling elements, which fill a plurality of receptacles 16, 18 such that the surfaces are aligned with neighbouring surfaces, e.g. so-called "blanking elements", and so-called "dummy elements", which replace single unused blades or vanes. Both kinds of filling elements have surfaces creating a low-loss flow path through the compressor section and/or the turbine section not equipped with the blades or vanes of the first or second blading modules. The first kind of filling elements is shown in Figs. 5, 6, 9 and 10 and the second kind of filling elements is shown in Figs. 7 and 11.

Fig. 5 shows a sector of an annular "blanking element" (blanking ring) 27 by which unused receptacles 18 of the casing 9 can be filled. Fig. 6 shows a section through the blanking ring 27 along the line A-A shown in Fig. 5. The blanking ring 27 comprises a platform portion 28 and a filling portion 26 and is designed such that the platform portion 28 is aligned with the inner surfaces 10 of neighbouring elements in the casing 9 when the filling portion is fitted into a plurality of unused receptacles 18.

A dummy vane 35 as a filling element is shown in Fig. 7. The dummy vane 35 comprises a platform portion 34 and a root portion 36 which is adapted to be inserted into an unused receptacle 18 of the casing 9. When the dummy vane 35 is fitted into a receptacle 18 of the casing 9 its platform portion 34 adjoins the platforms of neighbouring vanes or filling elements so as to form a smoothly aligned inner surface 10 of the housing 9 (compare fig. 4).

Note that although Fig. 4 shows the casing 9 of the turbine section 5, the blanking elements for the casing 9 in the compressor section 1 do not in principle differ from the blanking elements for the casing 9 of the turbine section 5.

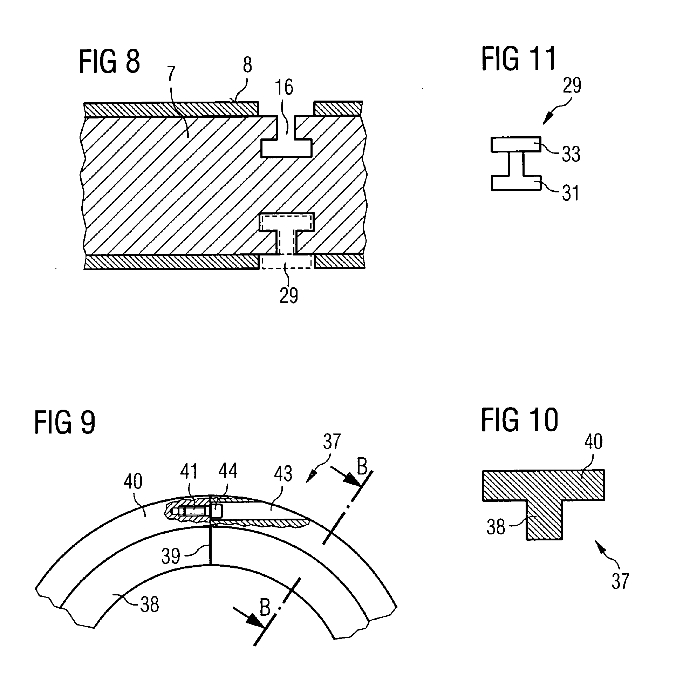

Fig. 9 shows a sector of an annular "blanking element" (blanking ring) 37 by which unused receptacles 16 of the rotor 7 can be filled. Fig. 10 shows a section through the blanking ring 37 along line B-B in Fig. 9. The blanking ring 37 comprises a filling portion 38 which can be inserted into unused receptacles 16 of the rotor 7, and a platform portion 40. The platform portion 40 is designed such as to be aligned with the outer surface 8 of neighbouring elements when the blanking ring 37 is fitted into an unused receptacle 16 (compare Fig. 8). Each blanking ring 37 is provided with a slit 39 and holes 41, 43 in the opposed walls of the slit 39. One of the holes has a larger diameter than the other and is a through hole 43 extending from the slit wall to the outer circumference of the blanking ring 37. The hole with the smaller diameter is a threaded blind hole 41. By use of a screw 44 which can be inserted into the through hole 43 and screwed into the threaded blind hole 41 it is possible to brace the blanking ring 37 so as to fix it to the rotor 7.

A blanking element 29, namely a dummy blade which resembles the platform 33 and the root 31 of a turbine blade, is shown in Fig. 11. This kind of blanking element 29 can be fitted into a receptacle 16 instead of a turbine blade. When it is inserted into a receptacle 16 of the rotor 7 with its root portion 31, its platform portion 33 adjoins the platforms of neighbouring turbine blades or filling elements so as to form a smoothly aligned surface around the rotor 7 (compare fig. 8).

The modular gas turbine engine in a fully equipped state is shown in Fig. 3. In the fully equipped state, a third blading module comprising the last row of turbine blades 59 and turbine vanes 61 as well as the first two rows of compressor blades 55 and compressor vanes 57 is added to the engine. Now, all receptacles 16, 18 are used for "real" blades and vanes instead for dummy blades and vanes or other filling elements. Now, the modular turbine engine has nine rows of compressor vanes and blades and three rows of turbine vanes and blades. Although an engine with a maximum of nine rows of compressor vanes and blades and three rows of turbine blades and vanes is described in the embodiments, the number of rows, in the compressor section as well as in the turbine section, can be higher or less than shown. Moreover, the rows of blades and vanes could also be divided differently into modules, the number of which can be any arbitrary number but at least two.

In the modular turbine engine, the compressor vanes 21 and blades 19 and the turbine blades 15 and vanes 17 are designed such that the gas turbine engine can be operated with only these blades and vanes fixed to the rotor 7 and the casing 9, respectively. In other words, the pressure ratios of the different rows are chosen such that the gas turbine engine can be operated in an optimum or near optimum operation condition range with only the blades and vanes of the first blading module fitted to the engine. The blades and vanes of the second blading module, i.e. the compressor blades 19 and the turbine blades 23, together with the respective compressor vanes 21 and turbine vanes 25, are adapted such to the blades and vanes of the first module that the modular gas turbine engine can be operated in an optimum or near optimum operation condition range with the blades and vanes of the first and second blading modules fitted to the engine. This can be achieved by suitably choosing a pressure ratio of the rows of blades and vanes in the second blading module with respect to the first blading module. The blades and vanes of the third blading module, i.e. the compressor blades 55, the compressor vanes 57, the turbine blades 59 and the turbine vanes 61, can be adapted to the blades and vanes of the first and second blading modules like the blades and vanes of the second blading module can be adapted to the blades and vanes of the first blading module. By suitably adapting the pressure ratios in the rows of the third blading module, it can be achieved that the fully equipped gas turbine engine can be operated in an optimum or near optimum operating condition.

The combustion section 3 of the modular turbine engine does not differ from a combustion section of a standard gas turbine engine, except for the possibility of exchanging liquid fuel nozzles. It comprises one or more combustion chambers 47 and a number of burners 45 located in an upstream end of the combustion chambers 47. In the combustion section 3, either a number of individual combustion chambers or a single annular combustion chamber may be used. In the case of using a liquid fuel, the liquid fuel nozzles of the burners may be changed depending on the number of blade and vane modules used. If the turbine engine is to be driven with gaseous fuel, exchanging the fuel nozzles in the burners 45 depending on the state of equipment would usually not be necessary.

A modification of the modular gas turbine engine that is shown in Fig. 1 in the partially equipped state is shown in Fig. 12. Instead of using sealed filling elements for all non-used receptacles 18 in the casing 9, some of the non-used receptacles 18 would be equipped with filling elements with extraction points 51, 52 (in the compressor section 1) or injection points 53, 54 (in the turbine section 5). The extraction points 51, 52 and the injection points 53, 54 communicate with bypass ducts 49, 50 within the casing 9 and/ or the rotor 7. The location of the extraction points 51, 52 in the compressor section 1 and the location of the injection points 53, 54 in the turbine section 5 are chosen such that the static pressure at the extraction holes is higher than the static pressure at the injection points 53, 54. This can be achieved by placing the extraction points far away from the installed compressor blading and placing the injection points close to the installed turbine blading. The bypass ducts 49, 50 allow for bypassing the combustor. By bypassing the burners 45, the operability range of a partially equipped modular gas turbine engine can be extended. In practice, such approach might well reduce the number of modules required over the whole life/upgrade cycle of the modular gas turbine engine.

A second embodiment of the modular gas turbine engine will now be described with respect to Figs. 13 to 15. In these Figures, elements which are identical or functionally similar to respective elements in the Figs. 1 to 12 are designated with the same reference numerals and will not be explained again.

The blading modules of the second embodiment correspond to the blading modules of the first embodiment. What was said with respect to the blading modules of the first embodiment therefore, is also valid with respect to the blading modules of the second embodiment. The difference of the second embodiment with respect to the first embodiment lies in that the second embodiment comprises a modular casing with a compressor casing 91, a combustion section casing 93 and a turbine casing 95.

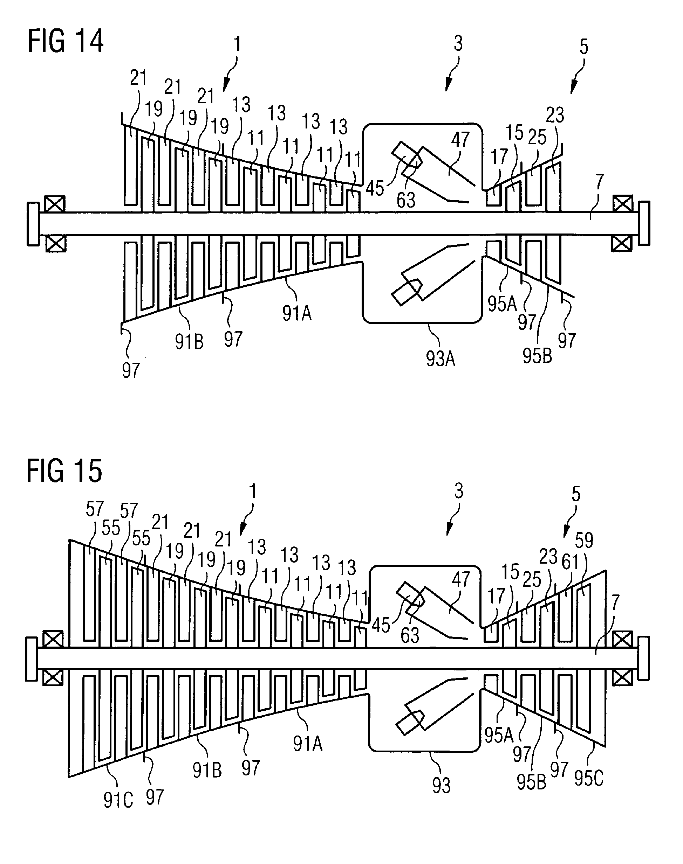

The compressor casing 91 comprises three casing modules 91a, 91b, 91c (compare Fig. 13 to 15), where the casing module 91a corresponds to the section of the compressor casing 91 which surrounds the compressor part, in which the blades 11 and vanes 13 of the first blading module are located. In the same manner, the turbine casing 95 comprises three casing modules 95a, 95b, 95c, where the casing module 95a represents that part of the turbine casing, in which the turbine blades 15 and the turbine vanes 17 of the first blading module are located. The configuration, in which the modular turbine engine is equipped with the first blading module and with the first casing module 91a of the compressor casing 91, the combustion section casing 93 and the first casing module 95a of the turbine casing 95 is shown in Fig. 13. The casing modules 91a and 95a comprise connection elements, such as e.g. flanges, to which further casing modules 91b, 95b (Fig. 14) can be fixed.

The second modules 91b, 95b of the compressor casing 91 and the turbine casing 95, respectively, are used when the modular turbine engine is extended to a second partially equipped state by the use of the second blading module. Then, the second compressor casing module 91b is fixed to the first compressor casing module 91a via the flange 97. Further, the compressor vanes 21 and the compressor blades 19 are fixed to the second compressor casing module 91b and the rotor 7, respectively. In the same manner, the second turbine casing module 95b is fixed to the flange 97 of the first turbine casing module 95a and the turbine vanes 25 and turbine blades 23 of the second blading module are fixed to the second turbine casing module 95b and the rotor 7, respectively.

When the modular gas turbine engine according to the second embodiment is to be fully equipped with blades and vanes (Fig. 15), a third compressor casing module 91c is fixed to the flange 97 of the second compressor casing module 91b. Further, the compressor vanes 57 and blades 55 of the third blading module are fixed to the third compressor casing module 91c and the rotor 7, respectively. In the same manner, the third turbine casing module 95c is fixed to the flange 97 of the second turbine casing module 95b and the turbine vanes 61 and blades 59 of the third blading module are fixed to the third turbine casing module 95c and the rotor 7, respectively.

In the second embodiment of the modular gas turbine engine, the casing extends only where the equipped module vanes and blades are located. Hence, filling elements for receptacles 19 in the casing 9 are not necessary. Compared to the modular turbine engine according to the first embodiment, the number of necessary parts for a partially equipped gas turbine engine can be reduced further. However, in the modular gas turbine engine according to the first embodiment, the length of the non modular casing in the turbine section 5 provides additional flow length, which could be used to enhance the performance of the exit diffuser.

With the inventive modular turbine engine, the compressor and turbine blading can be installed in several independent blocks or modules during the life of the machine, thus, more closely matching the customer's demand profile. This will result obviously in lower rated output until all blocks of blading are installed, but equally clearly will result in being able to offer the customer a competitive price advantage in the early stages of his use of the product more in line with the benefit he is able to extract from his business.

The operating pressure of the machine will fall, enabling the combustor to be run at aerodynamic conditions (speeds, temperatures) quite close to those later experienced with the fully-built engine and, thus, eliminating many of the issues currently caused by running far off-design. However, the partially equipped versions would run at lower pressure. This would include much improved performance with regard to emissions of environmental pollutants, and improve part lives since the centre module would be designed to withstand the more onerous loading of the fully equipped machine.

As the demand on the engine rises, for instance as a second phase of an industrial plant is built, the customer would then purchase the additional blading blocks from the manufacturer. By careful planning, the client may even be able to synchronise his upgrades with the service intervals of the equipment thereby obviating any potential downtime impact. For the engine supplier, this evens out the income stream from the equipment whilst aiding planning and manufacturing utilisation and encourages extra sales to clients who would previously have found a gas turbine engine uneconomic in the early stages of their business development.

In the partially-equipped configuration, by not compressing air which is not required to generate power, an efficiency benefit can be gained over what would have been the efficiency of a fully-equipped unit running far off-design. Furthermore, the engine will operate at lower force levels which should extend the life of the components.

It is also conceivable that, by careful design of the blading blocks or modules and appropriate life and refurbishment practices, that use of blades in a high-pressure fully-equipped engine could be followed by re-use in the less arduous duty of a partially-bladed unit giving a further commercial benefit and reducing pressure on scarce resources.

The invention as described in this specification provides a fundamental redesign of a gas turbine engine, so that the compressor and turbine blading can be installed in several independent blocks or modules during the life of the machine, dependent upon the duty required. A number of auxiliary hardware items to cover "not yet installed" elements are provided to permit this as are careful matching and balancing of blading design parameters.

The concept permits more closely matching industrial customer's plant demand and financing profiles as well as reducing well-known reliability issues caused by operation very far from the rated design ranges, particularly for the combustion system.

## Claims

1. Modular turbine engine, comprising
- a compressor section (1), a combustion section (3), a turbine section (5) which are arranged in flow series;
- a rotor (7) extending through the compressor section (1), the combustion section (3) and the turbine section (5);
- a casing (9, 91, 93, 95) extending over at least a part of the compressor section (1), the combustion section (3) and at least a part of the turbine section (5) and surrounding the rotor 7);
- at least one set of compressor blading including compressor vanes (13) and compressor blades (11); and
- at least one set of turbine blading comprising turbine vanes (17) and turbine blades (15),
- the rotor (7) being equipped with first receptacles which are designed such as to allow for fixing compressor blades (11) and turbine blades to the rotor (7);
- the casing (9, 91, 93, 95) being equipped with second receptacles (18) which are designed such as to allow for fixing compressor vanes (13) and turbine vanes (17) to the casing (9, 91, 93, 95);
**characterised**
- **in** at least a first blading module comprising at least one set of compressor blading (11, 13) and at least one set of turbine blading (15, 17) where the blades and vanes of the blading module are adapted to being fixed to first receptacles (16) of the rotor (7) and second receptacles (18) of the casing (9, 91, 93, 95); and
- **in that** the at least one set of compressor blading (11, 13) and the at least one set of turbine blading (15, 17) of the first module are adapted to each other so that the engine can be operated with only the blading sets of the first module being fixed to the rotor (7) and the casing (9, 91, 93, 95).

2. Modular turbine engine as claimed in claim 1, **characterised in** at least a second blading module comprising at least one set of compressor blading (19, 21) and at least one set of turbine blading (23, 25), where the blades and vanes of the second blading module are adapted to being fixed to other first receptacles (16) of the rotor (7) and other second receptacles (18) of the casing (9, 91, 93, 95) than the blades and vanes of the at least one set of compressor blading (11, 13) and the at least one set of the turbine blading (15, 17) of the first blading module; and
- **in that** the at least one set of compressor blading (19, 21) and the at least one set of turbine blading (23, 25) of the second blading module are adapted to each other and to the blading sets of the first module so that the engine can be operated with the blading sets of the first module and the blading sets of the second module being fixed to the rotor (7) and the casing (9, 91, 93, 95).

3. Modular turbine engine as claimed in claim 1 or claim 2, **characterised in** first filling elements (29, 37) being adapted to be inserted into first receptacles (16) not used for a set of compressor blading or a set of turbine blading.

4. Modular turbine engine as claimed in claim 3, **characterised in that** the first filling elements comprise blanking elements (29) and/or dummy elements (37).

5. Modular turbine engine as claimed in any of the preceding claims, **characterised in** second filling elements (27, 35) being adapted to be inserted into second receptacles (18) not used for a set of compressor blading or a set of turbine blading.

6. Modular turbine engine as claimed in claim 5, **characterised in that** the second filling elements comprise blanking elements (27) and/or dummy elements (35).

7. Modular turbine engine as claimed in any of the preceding claims, **characterised in** a casing (91, 93, 95) that comprises compressor casing modules (91a, 91b, 91c) being adapted to be connected to a casing (93) of the combustion section or to another compressor casing module (91a, 91b, 91c), each compressor casing module (91a, 91b, 91c) being adapted to a blading module such as to house the respective set or sets of compressor blading (11, 13, 19, 21, 55, 57).

8. Modular turbine engine as claimed in any of the preceding claims, **characterised in** a casing (91, 93, 95) that comprises turbine casing modules (95a, 95b, 95c) being adapted to be connected to a casing (93) of the combustion section (3) or to another turbine casing module (95a, 95b, 95c), each turbine casing module (95a, 95b, 95c) being adapted to a blading module so as to house the respective set or sets of turbine blading (11, 13, 19, 21, 55, 57).

9. Modular turbine engine as claimed in any of the preceding claims, **characterised in** bypass elements (49) which are adapted to be inserted into first (16) or second receptacles (18) located upstream and downstream of combustors in the combustion section (3) and which are designed such as to provide a flow path bypassing the combustors.

10. Modular turbine engine as claimed in any of the preceding claims, **characterised in that** a blading module further comprises a number of adapted fuel nozzles (63) which are adapted to the set or sets of blading(s) to be used together with the set or sets of blading(s).

11. Blading set for a modular turbine engine as claimed in any of the preceding claims, comprising at least one set of compressor blading (11, 13, 19, 21, 55, 57) the blades and vanes of which are adapted to being fixed to first receptacles (16) of the rotor (7) and second receptacles (18) of the casing (9, 91, 93, 95), where the number of turbine blades (15, 23, 59) and compressor blades (11, 19, 55) in the set of compressor blading and the set of turbine blading, respectively, is at least less than the number of respective first receptacles (16) of the rotor (7), and wherein the blades (11, 19, 55, 15, 23, 59) and vanes (13, 21, 57, 17, 25, 61) of the set of compressor blading and the set of turbine blading are designed such that the modular turbine engine can be operated with the blades (11, 19, 55, 15, 23, 59) and vanes (13, 21, 57, 17, 25, 61) of the at least one set of turbine blading and the at least on set of compressor blading alone or in combination with at least one set of turbine blading and at least one set of compressor blading of another blading module.

12. Casing module (91a, 91b, 91c, 95a, 95b, 95c) for a modular turbine engine as claimed in any of the claims 1 to 10, comprising connection elements (97) which are adapted to being connected with connecting elements (97) of at least one further casing module (91a, 91b, 91c, 95a, 95b, 95c) or a casing (93) in a combustion section (3) of the modular turbine engine and which comprises second receptacles (18) which are designed such that turbine vanes (17, 25, 61) or compressor vanes (13, 21, 57) of a set of turbine blading or a set of compressor balding, respectively, can be fixed thereto.
